# EUROPEAN PATENT APPLICATION

(11) **EP 3 932 885 A1**
(43) Date of publication of application: **05.01.2022**
(21) Application number: 20305753.4
(22) Date of filing: 03.07.2020
(51) Int. Cl.: C04B 20/10, C04B 28/02

(54) **FREE-FLOWING POWDER COMPRISING A POROUS SUBSTRATE FUNCTIONALIZED WITH AT LEAST ONE ACCELERATOR**

(71) Applicant: SIKA TECHNOLOGY AG, 6340 Baar (CH)
(72) Inventor: Soudier, Jerome, 01150 Vaux En Bugey (FR); Ben Harrath, Alexandre, 38300 Bourgoin Jallieu (FR)
(74) Representative: Sika Patent Attorneys

(57) **Abstract**

The present invention relates to a free-flowing powder composition comprising at least one substrate, said substrate having pores and an external surface between said pores, wherein said external surface is functionalized with at least one accelerator for a hydraulic setting composition, said accelerator being liquid, or hygroscopic or deliquescent, and wherein after 15 minutes of immersion of said free-flowing powder composition in water at 20°C at least 80% in weight of said accelerator is solubilized, provided that said free-flowing powder composition is immersed in an amount of water sufficient so that the saturation concentration of said accelerator cannot be reached.

The invention also relates to a method for preparing said free-flowing powder composition.

The invention is further directed to the use of said free-flowing powder composition as an additive for mortar or concrete composition so as to provide an accelerating effect, an anti-ageing effect and an anti-dusting effect.

The invention additionally concerns a dry mortar or concrete composition comprising a hydraulic binder, said free-flowing powder composition and a granulate, wet mortar or concrete composition and hardened body obtained therefrom.

## Description

### Technical Field

The invention pertains to the field of industrial mortars and concretes. In particular, the invention is directed to an accelerator for mortar or concrete including a hydraulic binder.

More specifically, the invention relates to a free-flowing powder comprising a porous substrate functionalized with at least one accelerator.

### Background Art

Dry mortar and concrete formulations based on cementitious systems often require accelerators for exhibiting a fast setting and/or a rapid development of strength and service properties after they have been mixed with water and installed.

These accelerators are also used to partially compensate cementitious binder's loss of reactivity resulting from exposure to air moisture or interaction with other components of dry-mix formulation during storage generally called "ageing".

To sum up, the three main effects of an accelerator are: accelerating setting, increasing service properties development kinetic and compensating ageing effects.

Among common accelerator several of them are hygroscopic or deliquescent or available only in a liquid form such as alkanolamines (MEA, DEA, TEA, MDEA, TIPA).

Case of liquid accelerators:

Throughout the present invention, unless otherwise stated, the term "liquid" means that the respective substance described as being liquid is in the liquid physical state at 20°C and 1013 mbar. Likewise, the term "solid" means that the respective substance described as being solid is in the solid physical state at 20°C and 1013 mbar.

For instance, Alkanolamines are commonly used as grinding agent and it is known that they may have an accelerating effect but have several drawbacks that strongly limit their practical use in dry mortars or concrete formulations.

Indeed, alkanolamines are fluid liquids, very viscous liquids or solids at common dry mortars or concrete composition temperature (5-35°C), due to their low melting point (respectively below 30 and 60°C for DEA and TIPA). Adding liquids during dry mixing of constituents may be difficult due to the lumps formation that can result from presence of liquids. Furthermore, water containing liquids induce a hydration reaction with cementitious binder particles surrounding liquid droplets, which may induce an ageing of dry mortars or concretes composition. Additionally, since viscosity of such liquids may vary considerably in the fabrication temperature range or even undergo liquid/solid transition, industrial handling and dosage of such additives is very complex.

Hence, it would be beneficial to provide a free-flowing powder containing a liquid accelerator, permitting the addition of the said liquid accelerator in a dry mortar or concrete composition, without its liquid state induces drawbacks such as lumps formation, ageing or difficulties with handling, dosage and mixing.

Hence it would be beneficial to provide a free-flowing powder containing an accelerator that undergoes liquid / solid transformation at usual temperature, so that liquid / solid transition does not induce drawbacks such as lumps formation, ageing or industrial handling, dosage and mixing difficulties.

### Case of hygroscopic or deliquescent accelerators

For instance, calcium chloride (CaCl₂) is commonly used as accelerator, in cementitious mortars or concretes, but has several drawbacks strongly limiting its practical use.

Indeed, calcium chloride is a highly hygroscopic compound, what makes its industrial use, and particularly its handling, difficult since lumps are very quickly formed. Accordingly, its dosage is difficult and in certain case even impossible. Moreover, CaCl₂ induces excessive and rapid corrosion of industrial tools. Above all, the very hygroscopic behavior of CaCl₂ renders the free-flowing powder form of the same almost inexistent since it quickly transforms into CaCl₂ saturated liquid solution, also known as brine, as a result, free CaCl₂ cannot be used in dry-mix compositions.

Even in cases where a specific production organization can be settled for permitting industrial use of dry powdered CaCl₂ as accelerating additive in dry-mix mortars and concretes field, its high hygroscopic behavior generates a faster and dangerous ageing of considered dry-mix. This faster and dangerous ageing result from the brine formation locally in the vicinity of the CaCl₂ hygroscopic particles inside dry-mix. These droplets of saturated CaCl₂ solution inside dry-mix induce lumps formation, hydration reaction with cementitious binder particles surrounding CaCl₂. As a result, after more or less time, the dry-mix mortar or concrete has a partial or a total loss of practical use, as having aged into a hardened product and is no longer a reactive mixture.

The content of CaCl₂ is limited because the brine formation leads to the releasing of chloride into the mortar or concrete and care should be taken to not over-pass limits of chloride content imposed by several national or international standards due to corrosion impact of chloride. The resulting maximal admissible CaCl₂ addition is thus often not sufficient to obtain the desired accelerating effect.

For that reasons, calcium chloride can barely be used in dry-mix mortars and concretes, and its use is often restrained as liquid (brine) addition during job-site in situ wet mixing of dry-mix formulation.

Some efforts have been made to overcome these drawbacks. For instance, patent US 1,791,630 discloses a method and means for preserving calcium chloride in dry condition when exposed to air. The solution proposed is to associate hygroscopic salt with a non-hygroscopic powdered material. The association is obtained by grounding the hygroscopic salt and the non-hygroscopic material together in a revolving hammer mill or equivalent. As a result, according to the authors, each hygroscopic salt is surrounded by finely powdered non-hygroscopic material and thereby absorption of moisture by the hygroscopic salt is avoided.

Quotation of Chinese patent applications CN106348643, CN110104988 and CN109250964 could also be made in the sense that they disclose methods for providing a diatomaceous earth modified with calcium chloride. These methods involve a wet mixing which leads to a penetration of the calcium chloride into the pores of the diatomaceous earth.

Although these compositions allow handling hygroscopic salt in a dry state, the action of the hygroscopic salt in the mortars composition is negatively impacted. Indeed, the hygroscopic salt is entrapped in the non-hygroscopic material and thus is less available in the wet mortar composition since the release of the hygroscopic salt is slowed.

Hence, it would be beneficial to provide a free-flowing powder containing a liquid, hygroscopic or deliquescent accelerator with no delay in the releasing of the same in a wet mortar or concrete composition.

### Advantages of the invention over the prior art

An advantage of the present invention is to provide a dry powdered form of a liquid, hygroscopic or deliquescent accelerator, in ready to use dry-mix formulations which can be handled without atmospheric precaution. In other words, accelerators of the present invention avoid problems due to liquid form or hygroscopic or deliquescent behavior of accelerators of the prior art, specifically accelerators of the present invention allow the preparation of ready to use dry-mix formulations.

Another advantage of the present invention is to induce accelerated hardening of the final formulated mortar or concrete, which is one of the initial purposes of introducing accelerator.

Yet another advantage is, in a surprising manner, to reduce ageing of formulated dry mortars and concretes which are intended to be stored before used. Indeed, hygroscopic additives, capturing moisture from the air, can induce formation of liquid in their vicinity. This liquid (solution of compound in water) can react with the cement, thus hydrating and ageing the latter, i.e. decreasing its global reactiveness. This is for example visible by formation of dark spots highlighting the presence of liquid and local hydration of cement. This behavior is also referred to as "ant-ageing effect" throughout this invention.

A supplementary advantage of the invention is to not require an excessive dosage of the accelerator. In the contrary, the present invention allows surprisingly to reduce amount of hygroscopic salt accelerator required for achieving needed acceleration effect.

In addition, the present invention surprisingly has the advantage to reduce dust generated when handling ready to use formulated mortar or concrete dry mixes. This allowing a safer use, as reducing both contact between potentially irritating dust (such as cements ultra-fine particles) and skin or mucous and inhaled level of respirable ultra-fine particles potentially dangerous (such as crystalline silica).

### Summary of the invention

The present invention relates to a free-flowing powder composition comprising at least one substrate, said substrate having pores and an external surface between said pores, wherein said external surface is functionalized with at least one accelerator for a hydraulic setting composition, said accelerator being liquid, or hygroscopic or deliquescent, and wherein after 15 minutes of immersion of said free-flowing powder composition in water at 20°C at least 80% in weight of said accelerator is solubilized, provided that said free-flowing powder composition is immersed in an amount of water sufficient so that the saturation concentration of said accelerator cannot be reached.

The invention also relates to a method for preparing said free-flowing powder composition.

The invention is further directed to the use of said free-flowing powder composition as an additive for mortar or concrete composition so as to provide an accelerating effect, an anti-ageing effect and an anti-dusting effect.

The invention additionally concerns a dry mortar or concrete composition comprising a hydraulic binder, said free-flowing powder composition and a granulate, wet mortar or concrete composition and hardened body obtained therefrom.

### Brief Description of Drawings

Other features, details and advantages will be shown in the following detailed description and on the figures, on which:
Figure 1 is a cross sectional view of a substrate having pores and an external surface.
Figure 2 is a graph comparing chloride concentration versus time of prior art and the invention.
Figure 3 is a graph comparing temperature versus time of prior art and the invention.
Figures 4 and 5 are comparative pictures of composition according to the invention and to the prior art.

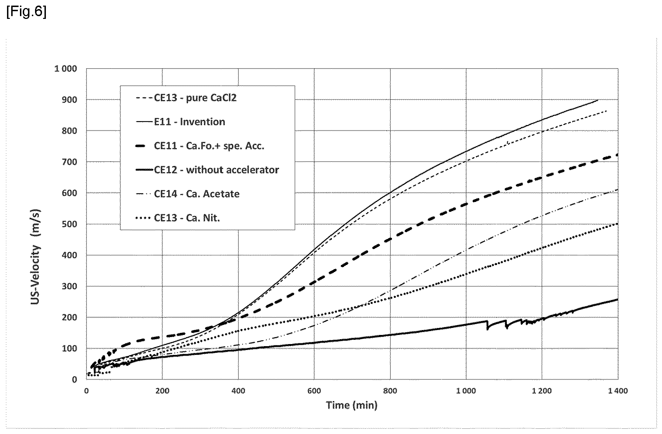

Figure 6 is a graph comparing ultrasonic propagation velocity versus time of prior art and the invention.

### Detailed description of the invention

As mentioned above, the invention relates to a free-flowing powder composition comprising at least one substrate, said substrate having pores and an external surface between said pores, wherein said external surface is functionalized with at least one accelerator for a hydraulic setting composition, said accelerator being liquid, or hygroscopic or deliquescent, and wherein after 15 minutes of immersion of said free-flowing powder composition in water at 20°C at least 80% in weight of said accelerator is solubilized, provided that said free-flowing powder composition is immersed in an amount of water sufficient so that the saturation concentration of said accelerator cannot be reached.

Without being bound by any theory, it is believed that the liquid, hygroscopic or deliquescent accelerator absorbs moisture which is entrapped in the pores of the porous substrate by capillarity.

### Definitions

In the sense of the invention, free-flowing powder means a solid in a form of powder that is sufficiently dry so that it does not contain any lump or agglomerate, or contains a few of the same so that it can be used in an industrial manner for dosage and incorporation in dry mix formulation without using special lump breaker equipment. In other words, in the sense of the present invention, free-flowing powder refers to a powder that may contain lumps or agglomerates which are disintegrating during standard mixing process such as Ribbon blender from Sofraden.

In the sense of the invention, functionalized with at least one accelerator means that said accelerator is adsorbed on the substrate in such a way that in a dry composition, said accelerator stays essentially at the surface of the substrate. Indeed, one of the objectives of the present invention is to provide a free-flowing powder composition of a liquid, hygroscopic or deliquescent accelerator, but in a manner that allows said accelerator to play its role in a formulation, in particular in a wet mortar or concrete composition. In other words, the liquid, hygroscopic or deliquescent accelerator needs to be sufficiently linked to the substrate so that the free-flowing composition of the invention can be handled without separating the liquid, hygroscopic or deliquescent accelerator and the substrate, but is released in wet compositions for which said liquid, hygroscopic or deliquescent accelerator is an active ingredient.

The term accelerator refers in particular to an additive for mineral binder compositions which will shorten the time after addition of water to said mineral binder composition and until a given level of compressive strength and/or flexural strength is reached as compared to a reference without any such additive added. In particular, within the context of the present invention, the compressive strength and/or flexural strength of a mineral binder composition with added accelerator is increased after 1 minute to 24 hours after mixing with water as compared to a reference without accelerator added.

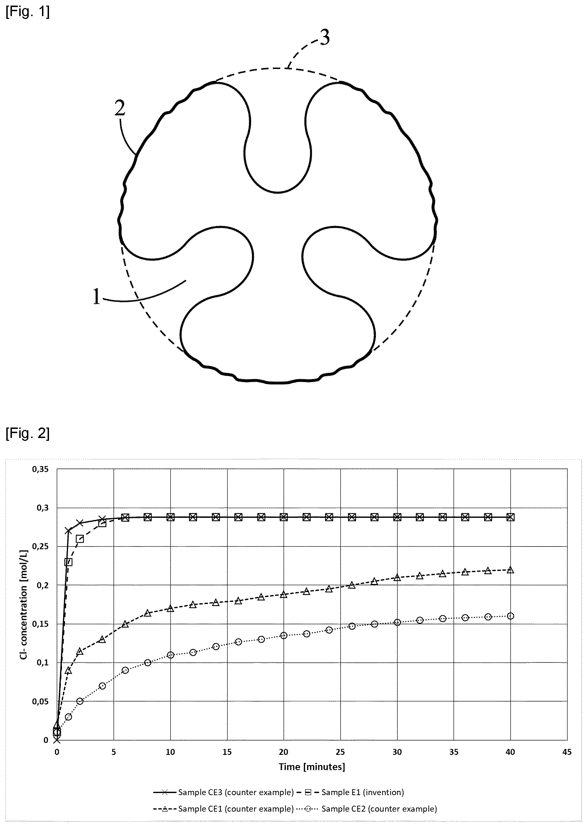

The free-flowing powder composition of the invention comprises a substrate having pores **1** and an external surface **2.** Such a substrate also defined a peripheral surface **3** which is an apparent surface of the substrate if said substrate had no pores. Referring to figure 1, the dash lines represent the part of the peripheral surface **3** covering the pores **1,** the external surface **2,** marked with bold lines, corresponds to the peripheral surface **3** minus the part of the peripheral surface **3** covering the pores **1**. In other words, the external surface corresponds to the surface of the substrate between the pores of the substrate, considering that a pore is a cavity with an open end localized on the peripheral surface.

In the sense of the invention, "without reaching the saturation concentration" means that the concentration of the accelerator after dissolution in the water is less than the saturation concentration of the accelerator in water. The saturation concentration is the maximum possible quantity of a substance that can dissolve in a standard volume of a specific solvent (e.g., water) under standard conditions of temperature and pressure. In other words, "without reaching the saturation concentration" means that there is enough water so that after the 15 minutes of immersion of said free-flowing powder composition in water at 20°C and atmospheric pressure it is still possible to dissolve additional accelerator in said water at 20°C and at atmospheric pressure. Water in this context relates to distilled water.

### The substrate

A substrate suitable for the implementation of the invention is any porous substrate on which liquid and especially liquid water can be absorbed and which is able to retain said liquid.

Advantageously, the substrate is a powder consisting of porous particles having a d50 diameter of at least 10µm, preferably at least 15µm and more preferably comprised between 20µm and 100µm.

The particle size can be determined by laser diffraction as described in ISO 13320:2009. In particular, a Mastersizer 2000 instrument with a Hydro 2000G dispersion unit and the Mastersizer 2000 software from Malvern Instruments GmbH (Germany) may be used. The D50 value represents the particle size where 50% of the particles have a lower particle size and 50% have a higher particle size.

Advantageously, the substrate has a porosity volume, measured by mercury intrusion porosimetry representing 30% of the total apparent volume of the substrate, preferably 40% and more preferably 50%. The total apparent volume corresponds to the sum of the volume of the pore and the volume of the substrate. In other words, the total apparent volume is equal to the volume taken by the substrate if the same had no pores.

Advantageously, the substrate has a mean pore size having a d50 of less than 10 µm, preferably less than 8 µm and more preferably less than 5µm, measured by mercury intrusion porosimetry.

As a result, the substrate is preferably selected from the group comprising or consisting of calcined clay, exfoliated vermiculite, zeolites, expanded perlite, precipitated silica, ground calcium carbonate, precipitated calcium carbonate, diatomaceous earth, calcined diatomaceous earth, crushed cementitious foam.

Calcined clay used as the substrate preferably is a calcined clay containing pores. It is especially preferred that if calcined clay is used as the substrate said calcined clay is an expanded calcined clay.

In a particularly preferred embodiment, the substrate is diatomaceous earth.

### The accelerator

According to the invention, the accelerator may be liquid, hygroscopic or deliquescent.

In the sense of the invention, liquid accelerator means that the accelerator is a liquid at room temperature, i.e, between 5°C and 35°C. More specifically, in one embodiment of the free-flowing powder composition according to the invention, the accelerator is liquid and has a viscosity of less than or equal to 3000 Pa.s at 20°C and 1.013 bar.

More specifically, in another embodiment of the free-flowing powder composition according to the invention, the accelerator is liquid and has a viscosity of more than or equal to 1.5 mPa.s at 20°C and 1.013 bar.

In the sense of the invention, hygroscopic accelerator means that the accelerator can be any accelerator with hygroscopic behavior, i.e. it can capture moisture from air by adsorption.

In the sense of the invention, deliquescent accelerator means that the accelerator can be any accelerator with deliquescent behavior, i.e. it can absorb moisture from air until it forms a solution.

As such, in a preferred embodiment, the liquid, hygroscopic or deliquescent accelerator is selected from the group comprising or consisting of sodium chloride, potassium chloride, magnesium chloride, calcium chloride, lithium hydroxide, lithium sulfate, lithium carbonate, sodium hydroxide, potassium hydroxide, sodium carbonate, potassium carbonate, sodium bi-carbonate, alkali metal nitrates, alkali metal nitrites, alkali metal thiocyanates, alkali metal salts or earth alkali metal salts of any of citric acid, formic acid, malonic acid, acetic acid, propionic acid, malic acid, or succinic acid, especially sodium or potassium or calcium salts thereof, alkali metal silicates, alkanolamines, especially dimethylaminoethanol, diethylaminoethanol, N-methyldiethanolamine (MDEA), triethanolamine (TEA), triisopropanolamine (TIPA), Diethanol-isopropanolamine (DEIPA), Ethanol-diisopropanolamine (EDIPA), N,N,N',N'-Tetrahydroxyethyl-ethylenediamine (THEED), and mixtures thereof. Hydrates of the above mentioned additives are also encompassed, for example magnesium chloride encompasses dry magnesium chloride and, for instance, magnesium chloride hexahydrate, calcium chloride also encompasses CaCl₂.xH₂O with x is a value between 0 (included) and 6 (included). Solutions in water or other solvents and suspensions in water or other liquids of the above mentioned additives are also encompassed, for example magnesium chloride encompasses magnesium chloride water solutions , for example calcium chloride encompasses calcium chloride water solutions knows as brines ; for example triisopropanolamine (TIPA) encompasses triisopropanolamine (TIPA) water solutions.

In a particular embodiment, the accelerator is selected from the group comprising or consisting of calcium chloride triethanolamine and triisopropanolamine and mixtures thereof, advantageously, the accelerator is calcium chloride, a mixture of calcium chloride and triethanolamine or a mixture of calcium chloride and triisopropanolamine, even more advantageously calcium chloride.

As a result, in a particularly preferred embodiment the substrate is diatomaceous earth and the hygroscopic accelerator is calcium chloride.

In a particular embodiment, the accelerator is hygroscopic or deliquescent and has a particle size comprised between 1 µm and 500 µm and a d50 of at least 8µm, preferably at least 12µm preferably comprised between 15 µm and 80 µm.

In an advantageous embodiment, the weight ratio S/A substrate (S) to accelerator (A) is comprised between 0.01 and 5.

In case the accelerator is calcium chloride, the weight ratio S/Acl, substrate (S) to Calcium Chloride accelerator (Acl) is advantageously comprised between 0.2 and 5.

In case the accelerator is an alkanolamine, the weight ratio S/Aam substrate (S) to alkanolamine accelerator (Aam) is advantageously comprised between 0.01 and 3.

### The releasing of the accelerator

According to the invention, after 15 minutes of immersion of said free-flowing powder composition in water at 20°C, at least 80% in weight of said accelerator is solubilized provided that said free-flowing powder composition is immersed in an amount of water sufficient so that the saturation concentration of said accelerator cannot be reached.

For instance, a method for evaluating the release of the accelerator from the free-flowing powder composition contains the following steps:
- Step 1: identification and quantification of the accelerator or mix of accelerators contained in the free-flowing composition,
- Step 2: Measuring the quantity of the accelerator released from the free-flowing powder composition through time.

The identification and the quantification of accelerator in step 1 may be done by analyzing the free-flowing composition with any method well known by a person skilled in the art. For instance this method can be, without being exhaustive: X-Ray Fluorescence, X-ray diffraction, Infra-red spectroscopy, Titration, Thermo-gravimetry or Differential thermo-gravimetry, gas phase or liquid phase chromatography, ionic chromatography, Inductively Coupled Plasma Optical / Atomic or Mass (ICP-OES ; ICP-AES or ICP-MS) spectrography, performed eventually after grinding and / or liquid extraction of accelerator in water or solvents.

The quantity of accelerator is then expressed as anhydrous content, for example, in a free-flowing composition containing calcium chloride hexahydrate as accelerator, the quantity of accelerator is expressed as wt% of anhydrous calcium chloride of the free-flowing composition.

Step 2 may be carried out by pouring the free-flowing composition into stirred distilled water at 20°C and atmospheric pressure. It is important that the quantity of free-flowing composition added is such that the total amount of accelerator contained in said quantity of free-flowing composition is below the water saturation concentration of the accelerator, and the quantity of accelerator dissolved in water is determined after 15 minutes by in-situ measurement of the concentration of the corresponding cation or anion by anion or cation sensitive probe, or ex-situ after filtration of the suspension and quantification of dissolved accelerator in the resulting solution by any adapted technic.

For example, in the case of a Calcium, or Potassium, or Magnesium, or Sodium Chloride accelerator containing free-flowing composition, a quantity of the free-flowing composition containing 8g of any aforementioned accelerator, expressed as anhydrous form, is added to 250ml of distilled water in a borosilicate glass beaker. The resulting suspension is stirred for 15 min at 20°C, using a magnetic agitator rotating at 60 to 200 rpm. After 15 minutes the content of chloride ion (Cl⁻) resulting from Calcium, or Potassium, or Magnesium, or Sodium Chloride accelerator is determined in-situ, by use of a Chloride Ion sensitive immerged sensor. The quantity of the accelerator present in the free-flowing composition is then calculated.

For example, in the case of an alkanolamine accelerator containing free-flowing composition, a quantity of the free-flowing composition containing 1g of the aforementioned accelerator, expressed as anhydrous form, is added to 250ml of distilled water in a borosilicate glass beaker and stirred for 15 minutes. The resulting water containing mix is centrifuged to extract a solution free of solid particles. The quantity of accelerator in solution is determined by a method such as detailed in ASTM D7599 - 16(2017). The quantity of accelerator present in the free-flowing composition is then calculated.

### The method for preparing the free-flowing powder composition

The invention also relates to a method for preparing the free-flowing powder composition described above.

The free-flowing powder composition may be prepared by mixing the accelerator of the present invention with the substrate of the present invention. Mixing is possible by any suitable means known to the person skilled in the art.

According to embodiments, the preparation of a free-flowing powder of the present invention comprises a step of contacting the solid substrate with a solid hygroscopic or deliquescent accelerator in such a manner that the particle sizes of said substrate and said hygroscopic or deliquescent accelerator are constant during the contacting step. Preferably such contacting is performed in a solid state.

The expression "solid state" means that the step of contacting is performed without solvent. In other words, the substrate and or the hygroscopic or deliquescent accelerator may contain moisture, but the same are in form of particles.

The expression "constant" means that the mean particle size is substantially the same before and after the contacting step. In other words, and in the present context, a particle size is considered to be constant if the decrease of the mean particle size d50 is less than 20% after the contacting step.

In a preferred embodiment, the step of contacting, in a dry state, the substrate with the hygroscopic or the deliquescent accelerator is carried out by mixing the same.

By mixing in dry state is meant any batch or continuous mixing process permitting to create a homogeneous volume distribution of particles of several natures. In frame of the present invention, and without being exhaustive, following batch mixers types, brand and models can be used : intensive mixer from Eirich, model RV ; Ribbon blenders from WAM group, model WBH ; Intensive mixer from Sofraden, model MIB ; Ribbon blender from Sofraden, model MHR, soft mixer from sofraden, model Sofragir. In frame of the present invention, and without being exhaustive, following continuous mixers types, brand and models can be used: intensive mixer from WAM group, model WAH; Intensive mixer from Eirich, model RV.

Comparatively, in the method discloses in US 1,791,630, the grinding step leads to a fine powder. In other words, the sizes of the particles are decreased and the porous material is divided in smaller particles. Moreover, the hygroscopic accelerator being smaller and being more quickly humidified, it can penetrate into the pores and a great percentage of the same is not located on the surface.

Indeed, the co-grinding, of an easily grindable compound such as CaCl₂ with a lower grindable compound such as diatomaceous earth, results in very fine CaCl₂ particle size compared to the size of the diatomaceous earth.

According to further embodiments, the preparation of a free-flowing powder of the present invention comprises a step of contacting the solid substrate with a liquid accelerator.

Such preparation preferably comprises a step of spraying droplets of the accelerator on the substrate eventually followed by a step of drying.

In the later method accelerator is involved in a liquid state, hence the liquid accelerator may be used as such or diluted in a solvent, preferably water. In case of hygroscopic and deliquescent accelerator, a dissolution step of the same is performed before the step of spraying droplets. In an embodiment, the hygroscopic or deliquescent accelerator is dissolved into water at a concentration above 50% of its saturation solubility in water at 20°C and 1.013 bar.

According to embodiments, the method for the preparation of a free-flowing powder composition as described above thus comprises a step of spraying an accelerator on the substrate, said accelerator being liquid and used as such, or said accelerator being liquid, hygroscopic or deliquescent and diluted in a solvent, preferably water.

With these two methods the accelerator is deposited essentially on the external surface of the porous substrate and the penetration of said accelerator into the pores is strongly limited.

In comparison, the methods disclosed in CN106348643, CN110104988 and CN109250964, also involving a hygroscopic or deliquescent accelerator in a liquid form, include a step of preparing a dispersion of the substrate and the hygroscopic or deliquescent accelerator. As a result, in the dispersion, the hygroscopic or deliquescent accelerator penetrates into the pores of the substrate and a great percentage of the same is not located on the surface.

### Use of the free-flowing powder composition

The invention also relates to the use of the free-flowing powder composition described above as an additive for mortar or concrete composition so as to provide an accelerating effect, an anti-ageing effect and an anti-dusting effect.

As such, preferably, the liquid, hygroscopic or deliquescent accelerator of the free-flowing powder composition of the invention has the faculty to act as an accelerator in a mortar or concrete composition including a hydraulic binder.

### Mortar or concrete composition

The invention is also directed to a dry mortar or concrete composition, in particular a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar comprising a hydraulic binder, the free-flowing powder composition described above and a granulate having a d50 comprised between 50µm and 3mm.

The granulate can be any granulate typically used for hydraulically setting compositions. Typical granulates are for example rock, crushed stone, gravel, slags resulting from iron, steel, copper or other metals generation or transformation, sand, especially quartz sand, river sand and/or manufactured sand, recycled concrete, glass, expanded glass, pumice, perlite, vermiculite, and/or fine granulates such as ground limestone, ground dolomite, and/or ground aluminum oxide, or mixtures thereof

In a preferred embodiment, the granulate is quartz sand, river sand, manufactured sand, for example from granite or limestone, or mixtures thereof.

The hydraulic binder is advantageously selected from the group comprising or consisting of Portland cement, alumina cement, sulphoaluminate cement, lime, sulfate and/or supplementary cementitious or pozzolanic materials.

Portland cement can be any cement according to standard EN 197-1. In particular type CEM I, CEM II, CEM III, CEM IV, and/or CEM V, especially CEM I (also called Ordinary Portland Cement - OPC). Portland cements according to other international standards, e.g. ASTM standards or Chinese standards, can be used as well.

The term "alumina cement" stands in particular for a cement with an aluminium content, measured as Al₂O₃, of at least 30% by weight, especially at least 35% by weight, in particular 35 - 58% by weight, Preferably, the alumina cement is alumina cement according to standard EN 14647.

Preferably, the sulphoaluminate cement is calcium sulphoaluminate cement (CSA).

The term lime stands for natural hydraulic lime, formulated lime, hydraulic lime, and air lime as described in the standard EN 459-1:2015.

More specifically, the term natural hydraulic lime (NHL), refers to materials derived solely from mineral deposits and naturally containing all elements (usually limestone, clay and impurities) to produce a hydraulic lime in a calcination process, typically at temperatures between 800°C and 1200°C. Natural hydraulic lime may act as a hydraulic binder in mortar compositions. NHL in the context of the present invention belongs to any of the classes NHL2, NHL3.5 or NHL5 according to EN 459-1:2015

The term hydraulic lime (HL) to a material which can be produced from limestone by thermal decomposition in a process called calcination at temperatures between 800°C and 1200°C. Hydraulic lime essentially consists of CaO and/or Ca(OH)₂ and additional siliceous and/or aluminosiliceous materials. HL in the context of the present invention belongs to any of the classes HL2, HL3.5 or HL5 according to EN 459-1:2015.

Formulated lime (FL) refers to a material with hydraulic properties and which is based on air lime or NHL with additional hydraulic and/or pozzolanic materials added.

In the sense of the invention, sulfate is a material with a content of sulfate. It is especially an inorganic salt of sulfate or sulfuric acid. Preferred sulfate sources within the present context are alkali metal salts of sulfuric acid, earth alkali metal salts of sulfuric acids, aluminium sulphate, aluminium hydroxysulfate or alums (XAl(SO4)₂ • 12 H₂O where X is potassium or ammonium). Such sulfates can be present in hydrated form. The sulfate source is chosen from sodium sulfate, potassium sulfate, magnesium sulfate, calcium sulfate, and their mixtures. An especially preferred sulfate source is calcium sulfate. Calcium sulfate, includes anhydrite, gypsum, calcium sulfate hemihydrate in the alpha- and beta-form, calcium sulfate dihydrate, and any mixtures thereof. Calcium sulfate can be based on LGD gypsum, phospho-gypsum, fluoro-gypsum, and natural gypsum. Anhydrite is a mineral consisting of CaSO₄ without any water of crystallization.

Supplementary cementitious materials means a material able to hydrate in presence of other cements, or pozzolanic material, this means that it can react with calcium hydroxide at ordinary temperature to form compounds with cementitious properties selected from the group consisting in ground granulated blast furnace slag (GGBS), steel making slag, Basic Oxygen Making slag, steel treatment ladle slag, Argon Oxygen Degazer slag, Vacum Oxygen Degazer slag, fly ash, silica fume, pyrogenic silica, precipitated silica, rice husk ash, volcanic ashes, pumice, zeolites, crushed glass, calcined clay, especially metakaolin, and mixtures thereof.

Mixtures of Portland cement, alumina cement, sulphoaluminate cement, lime, sulfate and/or supplementary cementitious or pozzolanic materials can be used. The weight ratios of Portland cement, alumina cement, sulphoaluminate cement, lime, sulfate and/or supplementary cementitious or pozzolanic materials is not particularly limited and may vary in wide ratios.

In a preferred embodiment, the content of hydraulic binder is comprised between 10% by weight and 60% by weight, the content of the free-flowing powder composition is comprised between 0.1% by weight and 15% by weight and the content of granulate is comprised between 30% by weight and 90% by weight.

In a particular embodiment, the dry mortar or concrete composition according to the invention further comprises at least one additive selected from the group comprising or consisting of fillers, plasticizers and/or superplasticizers, air entrainers, defoamers, stabilizers, rheology modifiers, especially thickeners, water reducers, redispersible polymer powders, accelerators, retarders, water resisting agents, strength enhancing additives, fibres, dedusting agents, blowing agents, pigments, corrosion inhibitors, biocides, chromium(VI) reducers.

In a preferred embodiment, the superplasticizer is selected from the group consisting of lignosulfonates, sulfonated vinylcopolymers, polynaphthalene sulfonates, sulfonated melamine formaldehyde condensates, polyethylene oxide phosphonates, polycarboxylate ethers (PCE), or mixtures thereof. Preferably, a hydraulically setting composition of the present invention comprises a PCE.

In a preferred embodiment, the thickener is selected from the group consisting of starch, pectin, amylopectin, modified starch, cellulose, modified cellulose, such as carboxymethylcellulose, hydroxymethylcellulose, hydroxyethylcellulose, methylhydroxyethylcellulose, casein, xanthan gum, diutan gum, welan gum, galactomannanes, such as guar gum, tara gum, fenugreek gum, locust bean gum or cassia gum, alginates, tragacanth gum, dextran, polydextrose, layered silicates such as sepiolite, bentonite or vermiculite, and mixtures thereof.

In a preferred embodiment, the retarder is selected from the group consisting of sugar acids, sugars, sugar alcohols, hydroxycarboxylic acids or their salts, phosphates, phosphonates, borates and amines. Preferably, the retarder is chosen from the group consisting of gluconic acid, citric acid, tartric acid or their respective sodium salts.

The redispersible polymer is a powder. The term redispersible polymer powder refers to a powder which contains a polymer and after introduction into water forms a stable dispersion. A redispersible polymer powder encompasses not only the polymer but typically also mixtures thereof with e.g. protective colloids, emulsifiers, and support materials. Redispersible polymer powders can be manufactured for example by spray drying of polymer dispersions as for example described in patent application EP1042391. Suitable redispersible powders are for example available from Wacker Chemie AG under the trade name Vinnapas. The use of redispersible powders of synthetic organic polymers is preferred for the context of the present invention. A synthetic organic polymer within the context of the present invention can be produced by radical polymerization of monomers selected form the group consisting of ethylene, propylene, butylene, isoprene, butadiene, styrene, acrylonitrile, acrylic acid, methacrylic acid, esters of acrylic acid, esters of methacrylic acid, vinylesters, vinylchloride. It is preferred that synthetic polymers are copolymers synthesized from two or more, preferably two, different monomers. The sequence of the copolymer can be alternating, blocked or random. Preferred synthetic organic polymers are copolymers of vinylacetate and ethylene, vinylacetate and ethylene and methylmethacrylate, vinylacetate and ethylene and vinylester, vinylacetate and ethylene and acrylic acid ester, vinylchloride and ethylene and vinyllaureate, vinylacetate and vinylveratate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester. The glass transition temperature (Tg) of said synthetic organic polymers can vary in a wide range. Tg of suitable synthetic organic polymers can be for example between -50°C and +60°C, preferably between -45°C and +35°C, more preferred between -25°C and +15°C.

The invention also concerns a wet mortar or concrete composition obtained by mixing the dry mortar or concrete composition according to the invention with water, preferably in a water/powder ratio comprised between 0.1 and 0.6, preferably between 0.2 and 0.5, more preferably between 0.2 and 0.35.

The invention also relates to a hardened body, obtained by hardening the wet mortar or concrete composition according to the invention.

### Examples

### Example 1: Releasing and efficiency of the accelerator

Three samples of diatomaceous earth associated with calcium chloride (CaCl₂) have been prepared. In sample E1, the free-flowing powder composition of the invention has been prepared by mixing 100g of diatomaceous earth with 100g of CaCl₂. In sample CE1, 100g of diatomaceous earth have been co-grinding with 100g of CaCl₂, as disclosed in US 1,791,630. In sample CE2 a suspension of 100g of diatomaceous earth and 100g of CaCl₂ in 300 mL of water has been prepared, stirred and dried at 200°C for 24 hours as disclosed in CN106348643, CN110104988 and CN109250964. A sample CE3, consisting of pure CaCl₂, has also been prepared.

Each of the four samples was added into water at 20°C such as total amount of CaCl₂ (expressed as anhydrous form) was equal, i.e. 8g of pure CaCl₂ in 250 mL of water, i.e. 8g of CE3 in 250mL of water and 16g of E1, CE1 and CE2 in 250 mL of water. The resulting composition was maintained under stirring meanwhile the concentration of chloride expressed as concentration of chloride ([Cl⁻]) in mol/L, was continuously recorded. The generation of chloride results from the dissolution of CaCl₂ of the four samples in water. Thus, for samples E1, CE1 and CE2 the evolution of the concentration of chloride over time reflects the release of the calcium chloride from the diatomaceous earth.

As illustrated in the graph of figure 1, the concentration of chloride reaches more than 0.28 mol/L for pure CaCl₂ (CE3) and for the invention (E1) within less than 5 minutes, which indicates a similar dissolution of the CaCl₂ introduced in both samples. Hence, the CaCl₂ is totally released from the free-flowing powder according to the invention (E1). In case of samples CE1 and CE2 the maximal concentration reached after 40 minutes of stirring is respectively 0.16 mol/L and 0.22 mol/L, which indicates only a partial and delayed release of the CaCl₂. Thus, compared to the prior art (CE1 and CE2), the present invention (E1) does not waste CaCl₂.

Hence, it is clear that the diatomaceous earth and the calcium chloride are associated differently depending on the method of preparation. The quicker release and the higher quantity, of calcium chloride show that in the sample according to the present invention (E1), the majority of the calcium chloride is located on the external surface of the diatomaceous earth and not inside the pores, compared to samples CE1 and CE2 according to the prior art.

Alternatively, when calcium chloride is dissolved in water an increase of the temperature of the solution is observed, because this is a highly exothermic process.

A comparison of the three samples E1, CE1 and CE2 and free CaCl₂ (CE3) have been performed by preparing four solutions of 80 mL containing 20g of CaCl₂, i.e. 20g of sample (CE3) were added to 80ml of water, and 40g of samples E1, CE1 and CE2 were added to 80ml of water.

As illustrated by the graph of figure 2 the top of the temperature curve in the case of free CaCl₂ appears at about 4 minutes, while the top of the temperature curve in the case of sample E1 of the present invention appears at about 6 minutes, and the top of the temperature curve of samples CE1 and CE2 appears respectively after about 15 minutes and 10 minutes. Thus, compared to the prior art (CE1 and CE2), the present invention (E1) releases CaCl₂ faster.

In the same manner as above, the quicker release and the higher quantity of calcium chloride released show that in the sample according to the present invention (E1), the majority of the calcium chloride is located on the external surface of the diatomaceous earth and not inside the pores, compared to samples CE1 and CE2 according to the prior art.

### Example 2: The accelerating effect

Five mortars have been prepared, a mortar with sample E1, i.e. with the free-flowing powder according to the invention (ME1), a mortar with sample CE1 (MCE1), a mortar with sample CE2 (MCE2), a mortar with sample CE3, i.e. pure CaCl2 (MCE3) and a mortar without CaCl2 (MCE4). The full compositions are given in table 1 below. When preparing these five mortars, all powdered materials were weighed in the respective amounts and mixed in a mixing bowl on a Hobart mixer for 3 min at 20°C and 50% Relative Humidity (RH). In all mortars, a visually homogeneous dry mix was obtained. Water was added to this dry mix in an amount to yield a weight ratio of water to powder (w/p ratio) as indicated in table 1. Mixing was then continued for another 3 min. Wet mortars obtained were casted in moulds permitting measurement of Vicat needle Initial Setting time according EN 196-3 (in a Vicatronic L0722 from company Controlab), as well as in 4x4x4 cm³ mold, that were left for curing 48hours in moulds in sealed plastics bags. After 48 hours, hardened mortars were removed from molds, and part of them were tested for compressive strength measurement, the other part being cured in sealed plastics bags until testing for compressive strength measurement 14 days after wet mixing.

Compressive strength was measured after a hardening time as indicated in table 1 and under conditions as indicated above. Measurements were performed according to EN 196-1:2016 on prisms of 40 x 40 x 160 mm and are expressed in MPa.

**Table 1**

| Mortar | ME1 (invention) | MCE1 (counter-example) | MCE2 (counter-example) | MCE3 (counter-example) | MCE4 (counter-example) |
|---|---|---|---|---|---|
| Silica sand <400µm (wt%) | 50 | 50 | 50 | 50 | 50 |
| Steel slag - Blaine Specific surface 3600cm²/g (wt%) | 23.50 | 23.50 | 23.50 | 24.25 | 25.00 |
| Ground Granulated Blast furnace Slag - Blaine specific surface 4500 cm²/g (wt%) | 23.50 | 23.50 | 23.50 | 24.25 | 25.00 |
| CE3 (wt%) | | | | 1.50 | |
| E1 (wt%) | 3 | | | | |
| CE1 (wt%) | | 3 | | | |
| CE2 (wt%) | | | 3 | | |
| Water / Powder (w/p) ratio | 0.2 | 0.2 | 0.2 | 0.2 | 0.2 |
| Initial setting time according Vicat needle test (min) | 175 | 1255 | 1775 | 193 | 2425 |
| Compressive strength after 2 days (Mpa) | 1.36 | 0.52 | 0.21 | 1.26 | 0.13 |
| Compressive strength after 14 days (Mpa) | 30.8 | 25.7 | 22.1 | 30.6 | 19.7 |

From initial vicat setting time and compressive strength results in table 1, it is obvious that mortars MCE3 and ME1 have very close setting time, early strength (48hours) and 14 days strength, which indicates that CaCl₂ in mortar ME1 is almost as fastly released than pure CaCl₂ in mortar MCE3.

It is as well obvious that mortars MCE1 and MCE2, formulated with CaCl₂ sources according to the prior art exhibit much longer setting time and slower strength development.

Hence, it is clear that the diatomaceous earth and the calcium chloride are associated differently depending on the method of preparation. The quicker and higher accelerating effect on setting time and strength development kinetic in the mortar of the invention is obtained thanks to the free-flowing powder according to the invention.

Moreover, when comparing MCE3 and ME1, it appears that a mortar according to the invention exhibits shorter setting time and higher early strength after 2 days than a mortar formulated with pure CaCl₂, these results indicate the positive effect of preliminary combination of high specific surface substrate (diatomaceous earth), playing the role of germinative surface in the vicinity of accelerating additive (CaCl₂).

In addition, comparing mortars MCE1 and MCE2 to mortar MCE4 leads to the conclusion that CaCl₂ in mortars MCE1 and MCE2 does bring an accelerating effect but with a factor fewer than 2 for the initial setting time and that the compressive strength are higher in mortars MCE1 and MCE2 but not as much as in mortar MCE3 (pure CaCl₂) and the mortar according to the invention.

### Example 3: free-flowing powder evaluation

Seven samples have been prepared as reflected in table 2 below.

**Table 2**

| Sample | CE3 (counter-example) | CE5 (counter-example) | E2 (invention) | E3 (invention) | E4 (invention) | E5 (invention) | E6 (invention) |
|---|---|---|---|---|---|---|---|
| CaCl₂ (wt%) | 100 | 40 | 50 | 50 | 50 | | |
| triethanolamine (TEA) water solution (30%) (wt%) | | | | | | 10 | |
| Triisopropanolamine (TIPA) water solution (30%) (wt%) | | | | | | | 10 |
| Calcium carbonate fine filler (wt%) | | 50 | | | | | |
| Magnesium stearate (wt%) | | 10 | | | | | |
| Diatomaceous earth C % retained on 45µ sieve : 5 % (wt%) | | | 50 | | | | |
| Diatomaceous earth P % retained on 45µ sieve: 14 % (wt%) | | | | 50 | | 90 | 90 |
| Diatomaceous earth M % retained on 45µ sieve : 7% (wt%) | | | | | 50 | | |
| free-flowing rating after 1 day | 0 | 3 | 3 | 3 | 3 | 3 | 3 |
| free-flowing rating after 14 days | 0 | 0 | 3 | 3 | 3 | 3 | 3 |
| free-flowing rating after 20 days | 0 | 0 | 2 | 3 | 1 | 3 | 3 |

Sample CE3 corresponds to pure CaCl₂, sample CE5 corresponds to a premix consisting of CaCl₂, a water repellant and a mineral filler, which is a common accelerator formulation in the mortar's field. Samples E2, E3 and E4 correspond to the composition according to the present invention with CaCl₂ on various substrates. Samples E5 and E6 correspond to the composition of the present invention with TEA or TIPA solutions on diatomaceous earth substrate.

Each sample was left at 20°C and 50% Relative Humidity (RH) in a thin (5mm) layer, and their free-flowing behavior was rated according to following rates : 0 = liquid phase visible ; 1 = no free-flowing : dry state + lumps formation ; 2 = difficult dry free flow : some lumps formation ; 3 = perfectly free-flowing.

As set forth in table 2 above, the sample according to the present invention remain in a free-flowing powder state until 14 days, and even in some cases until 20 days in high exposure to moisture atmosphere (thin layer, high contact surface). Further, the present invention is more and longer effective that known practices consisting in pre-mixing hygroscopic material with water repellant and fine mineral filler as illustrated with sample CE5.

### Example 3: anti-ageing effect in Portland cement compositions

Portland cement, preliminarily mixed with several hygroscopic additives, is left in form of thins layer (2 mm) exposed at air at 35°C and 75% RH for 6 days. Four different samples have been prepared as set forth in table 3 below.

**Table 3**

| Portland Cement composition | E7 (invention) | CE6 (counter-example) | CE7 (counter-example) | CE8 (counter-example) |
|---|---|---|---|---|
| Portland Cement CEM I 52,5R (wt%) | 94.4 | 94.4 | 97.1 | 97.1 |
| Calcium Formate (wt%) | | | 2.9 | |
| Sodium Formate (wt%) | | | | 2.9 |
| CaCl₂ (wt%) | | 5.6 | | |
| E3 (wt%) | 5.6 | | | |
| Aspect after 3 days at 35°C / 70% RH | No visible dark spot | 5 visible dark spots | No visible dark spot | 3 visible dark spots |
| Aspect after 6 days at 35°C / 70% RH | No visible dark spot | 8 visible dark spots | 3 visible dark spots | 6 visible dark spots |

Hygroscopic additives, capturing moisture from the air, can induce liquid formation in their vicinity. This liquid (solution of compound in water) can react with the cement, thus hydrating and ageing the later, i.e. decreasing its global reactiveness. This is visible by formation of dark spots highlighting the presence of liquid and local hydration of cement.

In spite of the high hygroscopic and deliquescent character of CaCl₂, when introduced in form of the present invention moisture pick up by the additive cement is strongly reduced, and thus resulting ageing is as well strongly reduced.

### Example 4: acceleration and anti-ageing effect in dry mortar compositions

### Example 4-1: acceleration in renders compositions

This example provides performances of a render composition according to the invention, compared to state of the art composition of facade render (FC)

Render CE9 illustrates a state of the art FC based on mixed binder Ordinary Portland Cement/hydraulic lime accelerated by a calcium nitride.

Render E8 illustrates a render were accelerator system of render CE9 has been replaced by the free-flowing powder according to the invention (preliminary dry mixing of diatomaceous earth and CaCl₂ in wt% ratio 50/50)

All powdered materials of composition CE9 and E8 were weighed in the respective amounts and mixed in a mixing bowl on a Hobart mixer for 3 min at 20°C and 50% Relative Humidity (RH). A visually homogeneous dry mix was obtained. Water was added to this dry mix in an amount to yield a weight ratio of water to powder (w/p ratio) as indicated in table 4 below. Mixing was then continued for another 3 min. Wet renders obtained were casted in moulds permitting continuous measurement of Ultrasonic propagation Speed (in IP-8 Ultrasonic Multiples Tester from company Ultratest) through renders during their hardening. Time for achieving an ultrasonic propagation speed of 1500 m/s was recorded, as such a speed is representative of the consistency required for an easy and visually effective manual smoothing & finishing of the facade render surface.

**Table 4**

| Render | CE9 (counter-example) | E8 (invention) |
|---|---|---|
| sand 1 (wt%) | 18 | 18 |
| sand2 (wt%) | 14.98 | 14.78 |
| sand3 (wt%) | 19 | 19 |
| sand 4 (wt%) | 14.5 | 14.5 |
| filler (wt%) | 16 | 16 |
| SODIUM OLEATE (wt%) | 0.1 | 0.1 |
| MAGNESIUM STEARATE (wt%) | 0.15 | 0.15 |
| cement CEM I 52.5 N CE CP2 NF (wt%) | 12 | 12 |
| hydraulic lime HL 3.5 CE (wt%) | 5 | 5 |
| Redispersible resine powder (wt%) | 0.07 | 0.07 |
| Calcium Ntiride (wt%) | 0.2 | |
| E1 (wt%) | | 0.4 |
| w/p (water/powder ratio) | 0.17 | 0.17 |
| Time for ultrasonic propagation speed reaches 1500 m/s (minutes) | 378 | 261 |

It is obvious that the use of the free-flowing powder composition according to the invention, as an additive permits to accelerate a render, ie to reduce the hardening time needed for surface finishing, more effectively than state of the art calcium nitride.

### Example 4-2: acceleration and anti-ageing effect in Tile Adhesive compositions

This example provides performances of a formulation illustrating the invention, compared to state of the art formulation of cementitious tile adhesive (CTA).

CTA CE10 illustrates a state of the art CTA based on mixed binder Ordinary Portland Cement/Ground Granulated Blast furnace Slag (OPC/GGBS) accelerated by a combination of calcium formate (Ca(HCO₂)₂ and sodium chloride (NaCI).

CTA E9 illustrates a CTA where accelerator system of render CE10 has been replaced by the free-flowing powder according to the invention (preliminary dry mixing of diatomaceous earth and CaCl₂ in wt% ratio 50/50)

CTA E10 corresponds to CTA E9, but in which the free-flowing powder according to the invention has been artificially aged (3 ageing cycles) prior introduction into CTA E10. The composition of each CTA is detailed in table 5 below.

The premix of the present invention as well as the CTAs have been tested as freshly produced as well as after 3 cycles of accelerated ageing.

By 1 cycle of accelerating ageing is meant:
- Packaging in standard paper and polyethylene film bags, filled to only 1/3 of the max volume capacity (this in order to maximize air / dry-mix contact)
- Storage at 35°C and 80% RH for 6 days.
- Followed by 24 hours storage at 5°C and 80% RH, aimed at favoring moisture condensation inside bag.

Performances of the tested CTAs were evaluated in terms of:
- Viscosity after mixing, as an indication of the application easiness,
- Initial Adhesive strength at 5°C tested 24hours after application, as an indication of the reactivity of the CTA in difficult conditions.

**Table 5**

| CTA | CE10 (counter-example) | E9 (invention) | E10 (invention) |
|---|---|---|---|
| Ordinary Portland Cement (wt%) | 16.2 | 16.2 | 16.2 |
| Ground Granulated Slag (wt%) | 10.8 | 10.8 | 10.8 |
| Sand (wt%) | 70.1 | 70.1 | 70.1 |
| Redispersible Polymer Powder (wt%) | 1 | 1 | 1 |
| Cellulosic Ether (wt%) | 0.25 | 0.25 | 0.25 |
| Rheology modifier (wt%) | 0.05 | 0.05 | 0.05 |
| Accelerator system state of the art: part 1 (Calcium Formate) (wt%) | 0.8 | | |
| accelerator system state of the art: part 2 (GGBS accelerator) (wt%) | 0.8 | | |
| Accelerator additive of the invention (50 wt% CaCl₂ / 50 wt Diatomaceous Earth M) (wt%) | | 1.6 | |
| Aged (3 cycles) Accelerator additive of the invention (50 wt% CaCl₂ / 50 wt% Diatomaceous Earth M) (wt%) | | | 1.6 |

| **measured after CTA production** | | | |
|---|---|---|---|
| Viscosity (Pa.s) | 540 | 575 | 607 |
| Initial Adhesive strength 5°C 24h (Mpa) | 0.37 | 0.43 | 0.40 |

| **measured after 3 ageing cycles** | | | |
|---|---|---|---|
| Viscosity (Pa.s) | 642 | 588 | 605 |
| Initial Adhesive strength 5°C 24h (Mpa) | 0.27 | 0.39 | 0.36 |

| **Performances change after 3 ageing Cycles** | | | |
|---|---|---|---|
| Delta Viscosity (%) | 19 | 2 | 0 |
| Delta Initial Adhesive strength (%) | -28 | -9 | -11 |

As can be seen, the use of the free-flowing powder composition according to the invention, as an additive render more effective the accelerator than the use of the accelerator according to the state of the art for the same level of addition (1.6wt%) as CTA E9 exhibits better performances (0.43 MPa Initial adhesive strength) than CTA CE10 (0.37 MPa), this without significant change of application behavior (no significant change of viscosity).

In addition, CTA E9 according to the invention, suffers much less from ageing than state of the art CTA CE10, which undergoes a significant drop of applicability (+ 19% viscosity after ageing) and even more significant drop of performances (- 28% adhesive strength). On the contrary CTA E9 does not exhibit significant change for viscosity and strength (respectively 2% & 9% change).

Moreover, even if based on an accelerating system having been preliminarily aged (E10), better performances than state of the art CTA CE10 are obtained.

It can be noted that CTA according to the present invention based on a free-flowing powder composition having been preliminarily aged (E10), presents very similar performances than CTA E9 based on a freshly produced free-flowing powder composition of the invention. This confirms the intrinsic ageing resistance of the present invention free-flowing powder composition.

### Example 5: anti-ageing effect in wet mortar compositions

Several CTA mortars have been prepared and mixed with the same amount of water (21.5 wt%) according to the same procedure. The compositions are given in table 6 below.

Wet mortar was placed in a vicat needle setting time measurement apparatus (EN 196-3 (in a Vicatronic L0722 from company Controlab)) and in a cell equipped with Ultrasonic speed measurement (in IP-8 Ultrasonic Multiples Tester from company Ultratest) immediately after end of wet mixing.

This in order to measure accurately the time needed for each mortar to set (vicat needle test) or to stiffen to a level allowing an ultrasonic speed propagation through sample of 500m/s.

Tests were performed immediately after CTA dry mortar production (tests marked before ageing) or after 3 cycles ageing condition already described in example 3 above.

**Table 6**

| CTA mortar | CE11 (counter-example) | CE12 (counter-example) | CE13 (counter-example) | E11 (invention) | CE14 (counter-example) | CE15 (counter-example) |
|---|---|---|---|---|---|---|
| Portland cement CEM I 52.5 R CE CP2 NF (wt%) | 16.2 | 16.2 | 16.2 | 16.2 | 16.2 | 16.2 |
| Ground granulated blast furnace slag (wt%) | 10.8 | 10.8 | 10.8 | 10.8 | 10.8 | 10.8 |
| Silica sand (wt%) | 70 | 71.6 | 70.8 | 70 | 70.8 | 70.8 |
| Calcium formate (wt%) | 0.8 | | | | | |
| CaCl₂ (wt%) | | | 0.8 | | | |
| E1 (wt%) | | | | 1.6 | | |
| Special accelerator /ggbs activator (wt%) | 0.8 | | | | | |
| Calcium Acetate (wt%) | | | | | 0.8 | |
| Calcium Nitrite (wt%) | | | | | | 0.8 |
| Latex powder (wt%) | 1.1 | 1.1 | 1.1 | 1.1 | 1.1 | 1.1 |
| Cellulosic ether (wt%) | 0.25 | 0.25 | 0.25 | 0.25 | 0.25 | 0.25 |
| Rheolgy modifier (wt%) | 0.05 | 0.05 | 0.05 | 0.05 | 0.05 | 0.05 |
| Vicat needle initial set time before ageing (min) | 750 | > 1350 | 840 | 675 | 975 | 840 |
| Vicat needle initial set time after ageing (min) | 1170 | > 1350 | >1350 | 780 | 1140 | >1360 |

| **Effect of ageing on initial set measured by vicat needle** | | | | | | |
|---|---|---|---|---|---|---|
| Setting delay (min) | + 420 | Not mesurable | + min 510 | + 105 | + 165 | + min 510 |

| **Ultrasonic velocity stiffening test** | | | | | | |
|---|---|---|---|---|---|---|
| Time for 500 m/s before ageing (min) | 877 | Not mesurable | 687 | 682 | 1146 | >1026 (time for 350 m/s) |
| Time for 500 m/s after ageing (min) | 994 | Not mesurable | 879 | 728 | 1288 | >1449 (time for 350 m/s) |
| Effect of ageing on stiffening delay (min) | + 117 min | Not mesurable | + 182 min | + 46 min | + 142 min | + 423 min |

All CTA mortar compositions contain the same amount of accelerator (0.8 wt%) except CE11 (2 accelerators for a total of 1.6 wt%) and CE12 taken as reference without accelerator.

CE11 is a strongly accelerated CTA mortar, combining both calcium formate as Portland cement accelerator, and a special additive promoting GGBS activation and hydration.

CE12 does not contain any accelerator.

CE13 contains pure CaCl₂.

E11 contains 0.8% CaCl₂ brought in form of the invention, i.e. a dry preliminary mixing of 50% CaCl₂ with 50% diatomaceous earth M)

CE14 contains calcium acetate and CE15 contains calcium nitride, which are, as well as calcium formate commonly used additives for CTA.

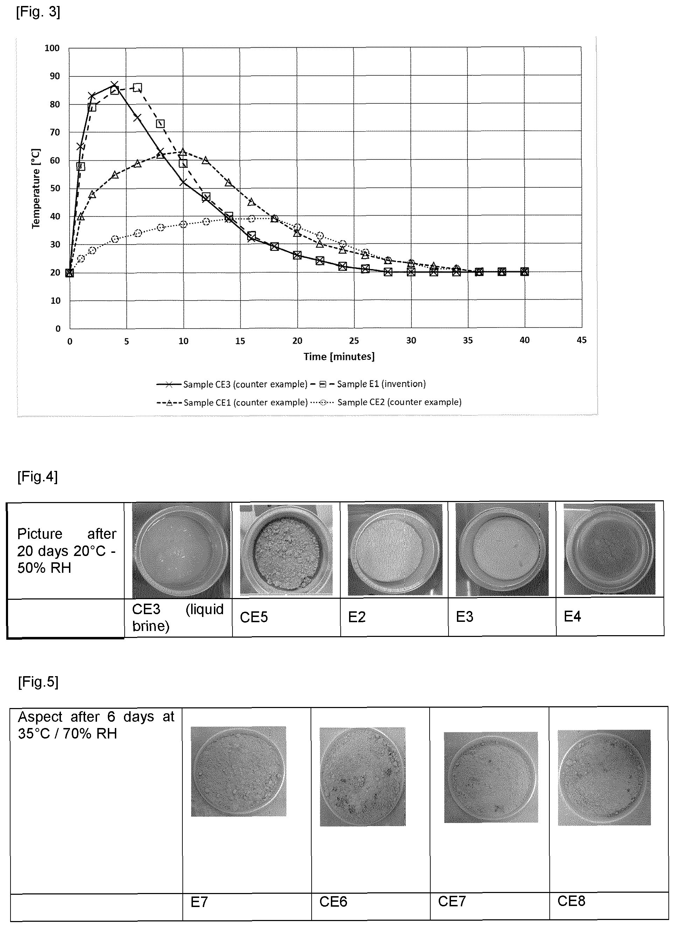

So as to more highlight the results set forth in table 6 above, a graph representing velocity versus time is represented in figure 5. It can be seen from figure 5 that the wet mortar according to the invention (E11):
- Exhibits the quickest setting, both measured by Vicat needle (675min) of by ultrasonic speed (682 min).
- Exhibits quicker setting than the mortar containing same amount of CaCl₂ directly added in dry mix (CE13). This confirm the positive effect of preliminary combination of high specific surface substrate (diatomaceous earth), playing the role of germinative surface in the vicinity of accelerating additive (CaCl₂).
- Exhibits quicker setting than mortar containing 2 accelerators (CE11), which show that invention is effective not only on Portland cement but as well on GGBS binder.
- Exhibits the lowest low stiffening delay resulting from preliminary ageing, (respectively +105 min and + 46min when tested using vicat needle or ultrasonic propagation speed). This shows the anti-ageing effect of the invention, resulting from moisture pick up and storage effect in diatomaceous earth pores.

It can be noted that impact of ageing is very low in E11 compared to CE13 containing the same amount of CaCl₂, what shows that invention allows to incorporate CaCl₂ without resulting effect of ageing induced by its high hygroscopic and deliquescent behavior.

It can be noted as well that mortar based on the invention (E11) suffers less from ageing (i.e. suffers from lower impact on setting time) than all other mortars containing less hygroscopic accelerator than CaCl₂ (CE11, CE14 and CE15 containing respectively calcium formate, calcium acetate and calcium nitrite)

### Example 6: effect of the weight ratio substrate to accelerator

An additional sample, according to the invention, (E12) of diatomaceous earth associated with calcium chloride (CaCl₂) has been prepared. In sample E12, the free-flowing powder composition of the invention has been prepared by mixing 75g of diatomaceous earth with 25g of CaCl₂.

Another sample, according to the invention, (E13) of diatomaceous earth associated with triisopropanolamine (TIPA) has been prepared. In sample E13, the free-flowing powder composition of the invention has been prepared by mixing 80g of diatomaceous earth with 20g of TIPA.

Five additional mortars have been prepared, a mortar with sample E1, i.e. with the free-flowing powder according to the invention (ME1B), two mortars with sample E12 (ME12 and ME12B) and two mortars with sample E13 (ME13 and ME13B). The full compositions are given in table 7 below. The composition of mortars ME1, MCE3 and MCE4 are reminded in table 7.

**Table 7**

| Mortar | MCE4 (counter-example) | MCE3 (counter-example) | ME1 (invention) | ME1B (invention) | ME12 (invention) | ME12B (invention) | ME13 (invention) | ME13B (invention) |
|---|---|---|---|---|---|---|---|---|
| Silica sand <400µm (wt%) | 50 | 50 | 50 | 50 | 50 | 50 | 50 | 50 |
| Steel slag - Blaine Specific surface 3600cm²/g (wt%) | 25.00 | 24.25 | 23.50 | 24.25 | 22.00 | 23.50 | 24.80 | 24.90 |
| Ground Granulated Blast furnace Slag - Blaine specific surface 4500 cm²/g (wt%) | 25.00 | 24.25 | 23.50 | 24.25 | 22.00 | 23.50 | 24.80 | 24.90 |
| CE3 (wt%) | | 1.50 | | | | | | |
| E1 (wt%) | | | 3 | 1.5 | | | | |
| E12 (wt%) | | | | | 6 | 3 | | |
| E13 (wt%) | | | | | | | 0.4 | 0.2 |
| Water / Powder (w/p) ratio | 0.2 | 0.2 | 0.2 | 0.2 | 0.2 | 0.2 | 0.2 | 0.2 |
| Initial setting time accodring Vicat needle test (min) | 2425 | 193 | 175 | 263 | 178 | 259 | 225 | 326 |
| Compressive strength after 2 days (Mpa) | 0.13 | 1.26 | 1.36 | 0.86 | 1.32 | 1.33 | 1.12 | 0.81 |
| Compressive strength after 14 days (Mpa) | 19.7 | 30.6 | 30.8 | 27.6 | 31.0 | 27.8 | 28.4 | 26.9 |

Mortars MCE3, ME1 and ME12 contains the same amount of Calcium Chloride (1.5% of dry composition), whereas ME1B and ME12B contains 0.75% of CaCl₂.

It is obvious that for mortars containing the same amount of CaCl₂, effect of the additive is similar, as per visible on vicat needle initial setting time and on compressive strength. It appears that mortars according to the invention (ME1 and ME12) exhibits shorter setting time and higher early strength after 2 days that mortars containing the same amount of CaCl₂ (mortar MCE3), which confirms the positive effect of preliminary combination of high specific surface substrate (diatomaceous earth), playing the role of germinative surface in the vicinity of accelerating additive (CaCl₂)

Mortars containing less CaCl₂ (ME1B and ME12B) and mortars containing another accelerator, i.e. TIPA (ME13 and M13B) at different amounts are also suitable properties.

### Example 7: anti-dusting effect

Dry mix mortar or concrete ready to mix with water formulation often contain very fine particles, for example particles smaller than 10 µm, and even particles smaller than 5 µm ; essentially coming from binders, i.e. Portland cement, alumina cement, ground granulated blast furnace slag, that generate dust when handled.

In order to limit or suppress dust, mortars and concretes may contain special additives dedicated to agglomerate the finest particles, such as oil, which may exhibit the drawback to increase wetting time and/or setting time.

Six dry mortar compositions have been prepared. Binders to additive ratios have been selected so as to reflect standard way in the art, and reflecting standard dosage of accelerator or state of the art dust suppressing agent when the dust suppressing power of accelerator has been quantified. The particle size distribution, using laser granulometer, in dry state of each sample has been analyzed. The dry mortars compositions and the particle size distribution are set forth in table 8 below.

**Table 8**

| Mortar | MCE16 (counter-example) | ME4 (invention) | ME4B (invention) | ME5 (invention) | ME6 (invention) | MCE17 (counter-example) |
|---|---|---|---|---|---|---|
| Portland cement CEM I 52.5 R CE CP2 NF | 56.6 | 56.6 | 56.6 | 56.6 | 56.6 | 59.0 |
| GGBS | 37.8 | 37.8 | 37.8 | 37.8 | 37.8 | 39.5 |
| Calcium formate | 2.8 | | | | | |
| GGBS specific accelerator | 2.8 | | | | | |
| E4 (wt%) | | 5.6 | | | | |
| E4 (wt%) preliminary aged 3 cycled as described above | | | 5.6 | | | |
| Invention (20% TEA solution / 80% Diatomace ous Earth M E5 | | | | 5.6 | | |
| Invention (20% TIPA solution / 80% Diatomace ous Earth M (wt%) E6 | | | | | 5.6 | |
| Dust suppressor (oil) | | | | | | 1.5 |

| **Laser granulometry results** | | | | | | |
|---|---|---|---|---|---|---|
| Cumulative Vol.% of particles < 10µm | 22.7 | 18.67 | 16.33 | 18.45 | 17.23 | 19.94 |
| Cumulative Vol.% of particles <5m | 14.35 | 9.16 | 5.98 | 6.01 | 6.13 | 8.35 |

It can be seen from table 8 that the dry mortars according to the invention (ME4, ME5 et ME6) with a freshly made accelerator has a reduced dust level:
- Since the volume of particles smaller than 10 µm (respectively 18.67%, 18.45 and 17.23 for additive based on CaCl₂, TEA and TIPA) and particles smaller than 5 µm (respectively 9.16% ; 6.01 and 6.13 for additive based on CaCl₂, TEA and TIPA) is similar to the volume of particles in mortar MCE17 containing a state of the art dust suppressor (oil), respectively 19.94% and 8.35 %,
- Since the volume of particles smaller than 10 µm (respectively 18.67%, 18.45 and 17.23 for additive based on CaCl₂, TEA and TIPA) and particles smaller than 5 µm (respectively 9.16% ; 6.01 and 6.13 for additive based on CaCl₂, TEA and TIPA) is similar to the volume of particles in mortar MCE16 containing standard hygroscopic accelerator such as calcium formate respectively 22.7 % and 14.35%.

It can also be seen from table 8 that the dry mortar according to the invention (ME4B) with a 3 days aged accelerator has a reduced dust level:
- Since the volume of particles smaller than 10 µm (16.33%) and particles smaller than 5 µm (5.98%) is lower than the volume of particles in mortar MCE17 containing a state of the art dust suppressor (oil), respectively 19.94% and 8.35 %,
- Since the volume of particles smaller than 10 µm (16.33%) and particles smaller than 5 µm (5.98%) is smaller than the volume of particles in mortar MCE16 containing standard hygroscopic accelerator such as calcium formate respectively 22.7 % and 14.35%.

## Claims

1. Free-flowing powder composition comprising at least one substrate, said substrate having pores and an external surface between said pores, wherein said external surface is functionalized with at least one accelerator for a hydraulic setting composition, said accelerator being liquid, or hygroscopic or deliquescent, and wherein after 15 minutes of immersion of said free-flowing powder composition in water at 20°C at least 80% in weight of said accelerator is solubilized, provided that said free-flowing powder composition is immersed in an amount of water sufficient so that the saturation concentration of said accelerator cannot be reached.

2. Free-flowing powder composition according to claim 1, wherein the substrate is selected from the group comprising or consisting of calcined clay, exfoliated vermiculite, zeolites, expanded perlite, precipitated silica, ground calcium carbonate, precipitated calcium carbonate, diatomaceous earth, calcined diatomaceous earth, crushed cementitious foam, preferably, the substrate is diatomaceous earth.

3. Free-flowing powder composition according to any one of claims 1 and 2, wherein the substrate is a powder consisting of porous particles having a d50 diameter of at least 10 µm, preferably at least 15 µm and more preferably comprised between 20 µm and 100 µm.

4. Free-flowing powder composition according to any one of claims 1 to 3, wherein the accelerator is selected from the group comprising or consisting of sodium chloride, potassium chloride, magnesium chloride, calcium chloride, lithium hydroxide, lithium sulfate, lithium carbonate, sodium hydroxide, potassium hydroxide, sodium carbonate, potassium carbonate, sodium bi-carbonate, alkali metal nitrates, alkali metal nitrites, alkali metal thiocyanates, alkali metal salts or earth alkali metal salts of any of citric acid, formic acid, malonic acid, acetic acid, propionic acid, malic acid, or succinic acid, especially sodium or potassium or calcium salts thereof, alkali metal silicates, alkanolamines, especially dimethylaminoethanol, diethylaminoethanol, N-methyldiethanolamine (MDEA), triethanolamine (TEA), triisopropanolamine (TIPA), Diethanol-isopropanolamine (DEIPA), Ethanol-diisopropanolamine (EDIPA), N,N,N',N'-Tetrahydroxyethyl-ethylenediamine (THEED), and mixtures thereof.

5. Free-flowing powder composition according to any one of claims 1 to 4 wherein the accelerator is selected from the group comprising or consisting of calcium chloride, triethanolamine and triisopropanolamine and mixtures thereof, advantageously, the accelerator is calcium chloride, a mixture of calcium chloride and triethanolamine or a mixture of calcium chloride and triisopropanolamine, even more advantageously calcium chloride.

6. Free-flowing powder composition according to any one of claims 1 to 5 wherein the weight ratio S/A, substrate (S) to accelerator (A), is comprised between 0.01 and 5.

7. Free-flowing powder composition according to any one of claims 1 to 6 wherein the accelerator is calcium chloride and the weight ratio S/Acl, substrate (S) to Calcium Chloride accelerator (Acl) is comprised between 0.2 and 5.

8. Free-flowing powder composition according to any one of claims 1 to 5 and 70, wherein the accelerator is an alkanolamine and the weight ratio S/Aam substrate (S) to alkanolamine accelerator (Aam) is comprised between 0.01 and 3.

9. Method for the preparation of a free-flowing powder composition according to any one of claims 1 to 8, comprising a step of contacting, preferably in a solid state, the solid substrate with a solid hygroscopic or deliquescent accelerator in such a manner that the particle sizes of said substrate and said hygroscopic or deliquescent accelerator are constant during the contacting step.

10. Method for the preparation of a free-flowing powder composition according to any one of claims 1 to 8, comprising a step of spraying an accelerator on the substrate, said accelerator being liquid and used as such, or said accelerator being liquid, hygroscopic or deliquescent and diluted in a solvent, preferably water.

11. Use of the free-flowing powder composition according to any one of claims 1 to 8, as an additive for mortar or concrete composition so as to provide an accelerating effect, an anti-ageing effect and/or an anti-dusting effect.

12. Dry mortar or concrete composition, in particular a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar comprising a hydraulic binder, the free-flowing powder composition according to any one of claims 1 to 8 and a granulate having a d50 comprised between 50µm and 3mm.

13. Dry mortar or concrete composition according to claim 12, wherein the content of hydraulic binder is comprised between 10% by weight and 60% by weight, the content of the free-flowing powder composition is comprised between 0.1% by weight and 15% by weight and the content of granulate is comprised between 30% by weight and 90% by weight.

14. Wet mortar or concrete composition obtained by mixing the dry mortar or concrete composition according to any one of claims 12 to 13 with water in a water/powder ratio between 0.1 and 0.6, preferably between 0.15 and 0.5, more preferably between 0.15 and 0.35.

15. Hardened body, obtained by hardening the wet mortar or concrete composition of claim 14.
